# EUROPÄISCHE PATENTSCHRIFT

(11) **EP 1 080 315 B1**
(45) Veröffentlichungstag und Bekanntmachung des Hinweises auf die Patenterteilung: **08.01.2003**
(21) Anmeldenummer: 00918827.7
(22) Anmeldetag: 22.03.2000
(51) Int. Cl.: F16D 3/04

(54) **KUPPLUNGSELEMENT ZUR VERBINDUNG VON ZWEI GLEICHACHSIG HINTEREINANDER UND MIT QUERABSTAND ZUEINANDER ANGEORDNETEN ACHSPARALLELEN WELLEN**
COUPLING ELEMENT FOR CONNECTING TWO SHAFTS WHICH ARE PARALLEL TO AN AXIS AND ARRANGED BEHIND EACH OTHER ON THE SAME AXIS WITH A CROSS-DISTANCE THEREBETWEEN
ELEMENT D'ACCOUPLEMENT POUR LA LIAISON DE DEUX ARBRES A AXE PARALLELE PLACES COAXIALEMENT L'UN DERRIERE L'AUTRE ET AVEC UN ECART TRANSVERSAL L'UN PAR RAPPORT A L'AUTRE

(30) Priorität: 24.03.1999 DE 19913177; 18.08.1999 DE 19939210
(43) Veröffentlichungstag der Anmeldung: 07.03.2001
(73) Patentinhaber: FEV Motorentechnik GmbH, 52078 Aachen (DE)
(72) Erfinder: PISCHINGER, Stefan, D-52076 Aachen (DE); YAPICI, Kurt, Imren, D-52249 Eschweiler (DE)
(74) Vertreter: Langmaack, Jürgen
(86) Internationale Anmeldenummer: EP0002526
(87) Internationale Veröffentlichungsnummer: WO00057073

(56) Entgegenhaltungen:
- CH-A- 424 392
- DE-B- 1 284 178
- US-A- 3 407 628
- US-A- 4 047 772

## Beschreibung

Die Erfindung betrifft ein Kupplungselement zur Verbindung von zwei gleichachsig hintereinander und mit Querabstand achsparallel zueinander angeordneten Wellen. In bestimmten Anwendungsfällen ist es erforderlich, daß die Höhenlage einer der Wellen zu einer festen Bezugsebene verändert werden muß, während die andere Welle ihre definierte Lage zur Bezugsebene behält. Das Problem besteht hierbei darin, daß beide Wellen trotz der einstellbaren Veränderung der Höhenlage zur Bezugsebene im gleichen Drehsinn und insbesondere mit gleicher Drehzahl umlaufen müssen, wobei durch das Kupplungselement auf die angetriebene Welle keine Drehzahlschwankungen aufgeprägt werden dürfen.

Ein derartiger Anwendungsfall ist beispielsweise bei einer Kolbenbrennkraftmaschine mit veränderbarem Brennraum gegeben, bei der die Veränderung des Brennraumes durch ein Anheben bzw. Ansenken der Kurbelwellendrehachse gegenüber einer Bezugsebene vorgenommen wird. Bei dieser Veränderung der Höhenlage der Kurbelwelle gegenüber der Bezugsebene ändert sich auch der Querabstand der Drehachse der Kurbelwelle zur Drehachse der nachgeschalteten, in ihrer Höhenlage fest angeordneten Abtriebswelle.

DE-B-1 284 178 offenbart ein Kupplungselement nach den Oberbegriff des Anspruchs 1.

Aus DE-36 44 721-A ist eine derartige Kolbenbrennkraftmaschine bekannt, bei der dieses Problem dadurch gelöst worden ist, daß an einem Verstellexzenter für die Veränderung der Höhenlage der Kurbewelle ein Lagergehäuse befestigt ist, in das einenends ein mit der Kurbelwelle verbundenes Antriebsritzel hineinragt und in das anderenends mit dem vorgegebenen Querabstand ein mit der Abtriebswelle verbundenes Abtriebsritzel hineinragt. Die Drehachse des Stellexzenters fällt mit der Drehachse des Abtriebsritzels zusammen. Die Kraftübertragung zwischen dem Antriebsritzel an der Kurbelwelle und dem Abtriebsritzel erfolgt durch ein gleichachsiges Umlaufräderpaar, von denen ein Rad auf dem Antriebsritzel abrollt und das andere Rad auf dem Abtriebsritzel abrollt. Mit dieser Anordnung ist jede Höhenverstellung ohne die Aufprägung von Drehungleichförmigkeiten auf den Abstriebsstrang gewährleistet. Der Nachteil besteht jedoch darin, daß nur Raum für geringe Zahnraddurchmesser zur Verfügung steht, so daß das gesamte Drehmoment der Kolbenbrennkraftmaschine über Zahnräder mit geringem Durchmesser übertragen werden muß. Hierdurch ergeben sich sehr schnell Grenzen in der Größe des übertragbaren Drehmomentes. Ferner müssen die Zahnkräfte als Reaktionskräfte über eine entsprechende Lagerung im unmittelbaren Getriebebereich aufgenommen werden. Ein weiterer Nachteil der Anordnung besteht in einer verhältnismäßig großen Baulänge.

Aus DE-733 932 ist ein Kupplungselement zur Verbindung von zwei gleichachsig und mit Querabstand achsparallel zueinander angeordneten ortsfesten Wellen bekannt. Die vorbekannte Lösung weist eine große Baulänge auf, wobei durch den Abstand ihrer Drehkörper zueinander und der dadurch bedingten Länge der diese verbindenden Kurbelelemente erhebliche Biegebeanspruchungen an den Kurbelelementen bei der Übertragung großer Drehmomente auftreten.

Der Erfindung liegt nun die Aufgabe zugrunde, ein Kupplungselement zu schaffen, das die Probleme einer Wellenverlagerung löst und mit dem große Drehmomente übertragen werden können und das gleichzeitig aber auch kurz baut.

Diese Aufgabe wird gemäß der Erfindung gelöst durch ein Kupplungselement nach Anspruch 1. Mit Hilfe eines derartigen Kupplungselementes ist es möglich, innerhalb des vorgegebenen maximalen Querabstandes beliebige Höhenlagen der achsparallel bewegbaren Wellen einzustellen, wobei gewährleistet ist, daß die Drehzahl des antreibenden Drehkörpers ohne jegliche Drehzahlschwankung auf den angetriebenen Drehkörper übertragen wird. Über die Dimensionierung der Kurbelelemente in den Drehkörpern ist eine Auslegung für das jeweils zu übertragende maximale Drehmoment möglich. Neben einer entsprechenden Dimensionierung der Kurbelelemente kann auch noch durch eine Erhöhung der Zahl der Kurbelelemente in den Drehkörpern auf einem oder auch unterschiedlichen Teilkreisen das durchleitbare maximale Drehmoment vergrößert werden. Ein besonderer Vorteil des erfindungsgemäßen Kupplungselementes besteht darin, daß keine Rückstellkräfte auf die Lagerungen der Drehkörper wirken. Dies ist insbesondere bei der Verwendung an einer Kurbelwelle einer Kolbenmaschine, beispielsweise eines Motors oder eines Kompressors von Bedeutung. Um eine definierte geometrische Zuordnung zwischen dem quer bewegbaren Drehkörper und dem raumfesten Drehkörper zu gewährleisten, ist es in vorteilhafter Ausgestaltung der Erfindung zweckmäßig, wenn die Drehkörper jeweils wenigstens drei Kurbelelemente aufweisen. Zweckmäßigerweise sind bei einer Anordnung von mehreren Kurbelelementen je Drehkörper diese, in Umfangsrichtung gesehen, in gleichem Abstand zueinander angeordnet. Auch eine spiegelsymmetrische Anordnung in bezug auf einen Durchmesser des Drehkörpers ist möglich. Dies ist insbesondere bei schnell laufenden Wellen zur Vermeidung von Unwuchten vorteilhaft.

Weitere Merkmale von Ausgestaltungen der Erfindung sind aus den unteransprüchen sowie aus der nachfolgenden Beschreibung zu entnehmen.

Die Erfindung wird anhand schematischer Zeichnungen näher erläutert. Es zeigen:
- Fig. 1: eine perspektivische Schemadarstellung einer Vierzylinder-Kolbenbrennkraftmaschine mit verlagerbarer Kurbelwelle zur Veränderung des Verdichtungsverhältnisses mit Kupplungselement zur Verbindung von Kurbelwelle und Abtriebswelle,
- Fig. 2: einen Schnitt durch ein Kupplungselement gemäß der Linie II-II in Fig. 1,
- Fig. 3: eine Aufsicht auf das Kupplungselement gemäß Fig. 2 in Achsrichtung gesehen,
- Fig. 4: die Ausbildung der Ankopplung eines Steuertriebs an die Kurbelwelle analog zum Schnitt entsprechend der Linie II-II in Fig. 1
- Fig. 5: eine Ausführungsform eines Kurbelelements,

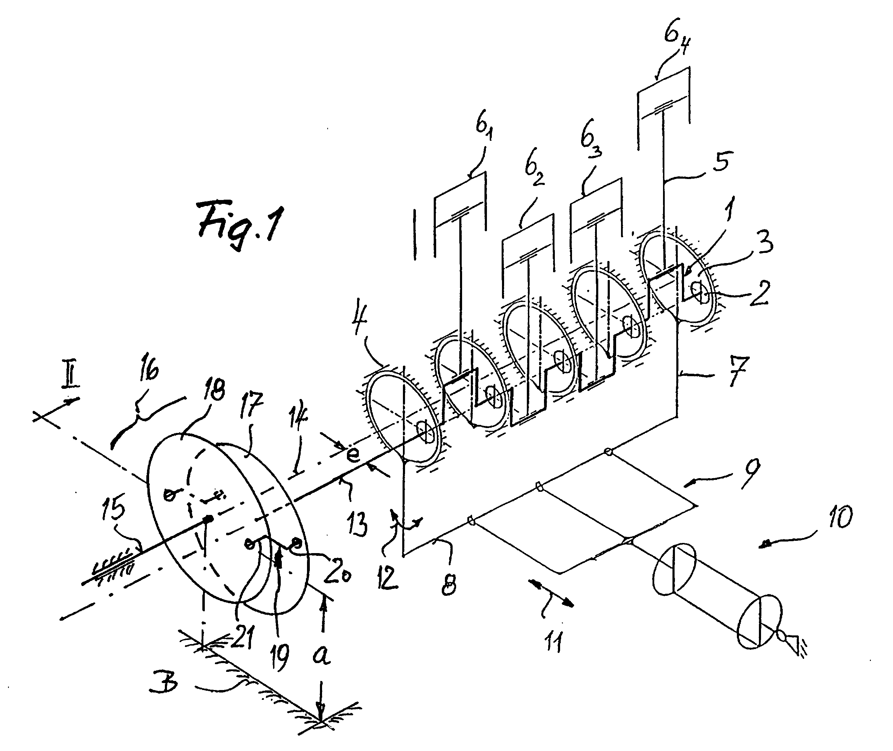

Wie die schematische Darstellung gem. Fig. 1 erkennen läßt, ist eine Kurbelwelle 1 einer 4-Zylinder-Kolbenbrennkraftmaschine mit ihren Kurbelwellenlagern 2 in Exzenterringen 3 gelagert, die ihrerseits verdrehbar in entsprechende Traglagergn eines angedeuteten Motorblocks 4 gelagert sind. Mit der Kurbelwelle 1 sind über Pleuel 5 jeweils die hier nur schematisch angedeuteten Kolben 6 verbunden. Die Kurbelwelle ist in einer Stellung gezeigt, in der die Kolben 6₁ und 6₄ sich in der oberen Totpunktstellung befinden, während sich die Kolben 6₃ und 6₃ in der unteren Totpunktstellung befinden. Zumindest einer der Exzenterringe 3 ist starr mit einer als Schwenkhebel ausgebildeten Verdreheinrichtung 7 verbunden, der jeweils aus dem Flugkreis der Kurbelwelle 1 herausgeführt ist. Die Schwenkhebel 7 sind über eine Koppelstange 8 fest miteinander verbunden, so daß ein synchrones Verdrehen aller Exzenterringe 3 möglich ist. Die Koppelstange 8 ist über ein Zugelement 9 mit einem schematisch dargestellten Antrieb 10 verbunden. Bei einer Bewegung des Zugelementes in Richtung des Doppelpfeiles 11 werden die Schenkhebel 7 entsprechend hin und her verschwenkt (Doppelpfeil 12), so daß sich durch die Verdrehung der Exzenterringe 3 um eine ortsfeste Schwenkachse 14 dementsprechend auch jeweils die Höhenlage a der Drehachse 13 der Kurbelwelle 2 gegenüber einer Horizontalebene B als Bezugsebene verändert. Das Bezugszeichen 13 wird nachstehend auch für den der Kurbelwelle 1 zugehörigen Wellenstumpf verwendet.

Wie aus Fig. 1 ferner ersichtlich, ist die Drehachse 13 der Kurbelwelle 1 mit einer Exzentrizität e zur Schwenkachse 14 der Exzenterringe 3 angeordnet und wird über die Schwenkhebel 7 aus einer angenommenen Mittelstelle (der Schwenkhebel 7 weist hierbei senkrecht nach unten) zur Veränderung der Höhenlage a nach oben oder unten bewegt. Dadurch wird die Drehachse 13 der Kurbelwelle in bezug auf die ortsfeste horizontale Bezugsebene B auch gegenüber der ortsfesten Schwenkachse 14 der Exzenterringe 3 angehoben oder abgesenkt. Das bedeutet aber, daß die Kolben 6 jeweils in der oberen Totpunktstellung um das gleiche Maß näher an das Brennraumdach des Zylinders heranreichen, so daß dementsprechend auch das Verdichtungsverhältnis erhöht und bei einer gegenläufigen Verdrehung der Exzenterring 3 vermindert wird.

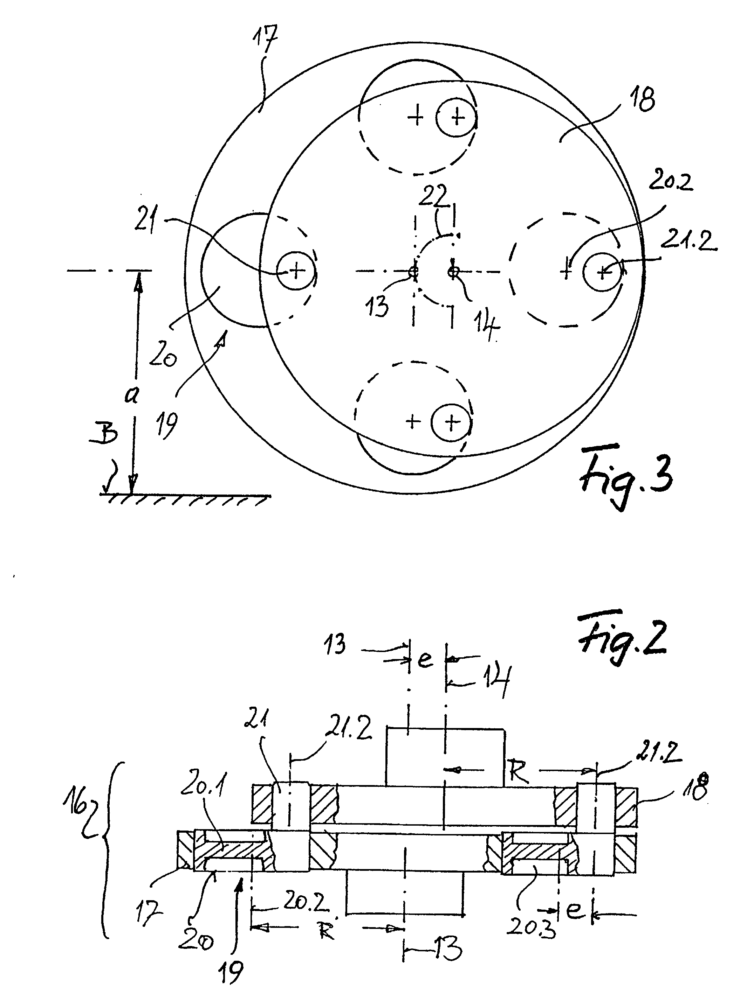

Der Abtrieb der Kolbenbrennkraftmaschine durch den die Kurbelwelle 1 verlängernden Wellenstumpf 13 erfolgt über eine Abtriebswelle 15, die fluchtend zur ortsfest gelagerten Schwenkachse 14 der Exzenterringe 3 angeordnet ist. Um den durch die Exzentriziztät e gegebenen Querabstand zwischen der Drehachse 13 und der Achse der Abtriebswelle 15 zu überbrükken, ist der mit der Kurbelwelle 1 verbundene Wellenstumpf 13 über ein Kupplungselement 16 mit der Abtriebswelle 15 verbunden. Das Kupplungselement 16 wird im wesentlichen durch einen ersten, mit dem Wellenstumpf 13 der Kurbelwelle 1 fest verbundenen Drehkörper 17 und einen zweiten, mit der Abtriebswelle 15 fest verbundenen Drehkörper 18 gebildet. Die beiden Drehkörper 17 und 18 sind in parallelen Drehebenen dicht nebeneinander angeordnet und sind über Kurbelelemente 19 miteinander verbunden. Der Kurbelradius der Kurbelelemente 19 entspricht der Exzenrizität e der Drehachse 13 der Kurbelwelle 1 zur ortsfesten Schwenkachse 14 der Exzenterringe 3. Funktion und konstruktiver Aufbau werden nachfolgend anhand der Fig. 2 und 3 sowie für eine bevorzugte Ausführungsform anhand von Fig. 7 näher erläutert.

In Fig. 2 ist schematisch ein Ausführungsbeispiel für ein Kupplungselement 16 im Schnitt dargestellt und in Fig. 3 in einer zugeordneten Aufsicht in Achsrichtung dargestellt.

Bei diesem Ausführungsbeispiel ist der Wellenstumpf 13 der Kurbelwelle 1 mit dem beispielsweise scheibenförmig ausgebildeten Drehkörper 17 fest verbunden, dessen Drehachse mit der Drehachse 13 der Kurbellwelle zusammenfällt.

Die Abtriebswelle 15 ist entsprechend mit einem Drehkörper 18 fest verbunden, dessen Drehachse mit der Schwenkachse 14 der Kurbelwelle zusammenfällt. Die Drehachsen 13 und 14 der beiden Wellen 13 und 15 sind gleichachsig ausgerichtet und im Querabstand der Exzentrizität e achsparallel angeordnet.

Die beiden Drehkörper 17 und 18 sind über wenigstens zwei Kurbelelemente 19 miteinander verbunden, die mit ihren Kurbelzapfen 20 und 21 frei drehbar in den zugeordneten Drehkörpern 17 und 18 gelagert sind. Der Abstand zwischen den Achsen der beiden Kurbelzapfen 20 und 21 bildet den Kurbelradius, der der Exzentrizität e zwischen den beiden Drehachsen 13 und 14 entspricht. Die Kurbelelemente sind hierbei so ausgerichtet, daß ihre Kurbelaachsen 20.2 und 21.2 in bzw. parallel zu der durch die beiden Achsen 13 und 14 definierten Ebene verlaufen. Wie Fig. 2 zeigt, sind die Kurbelelemente so gestaltet, daß sie als Kurbelzapfen einen ersten Zylinderkörper 20.1 mit großen Durchmesser und mit seiner Achse 21.2 im Abstand e hierzu als Kurbelzapfen angeordneten zweiten Zylinderkörper 21 mit geringerem Durchmesser aufweisen. Der Zylinderkörper 20.1 ist im treibenden Drehkörper 17 gelagert, während der Zylinderkörper 21 im getriebenen Drehkörper 18 gelagert ist. Die Lagerung der das Kurbelelement bildenden Zylinderkörper in den zugeordneten Drehkörpern kann beispielsweise über Wälzlager, insbesondere in Form von Nadellagern erfolgen. Hierbei kann es zweckmäßig sein, wenn wenigstens an einem Drehkörper die Wälzlager elastisch gegenüber dem Drehkörper abgestützt sind.

Wie die Aufsicht gem. Fig. 3 erkennen läßt, sind bei dem Ausführungsbeispiel vier derartiger Kurbelelemente 19 im jeweiligen Drehkörper in gleichem Abstand in Umfangsrichtung gesehen gelagert. Der Abstand R der Achse 20.2 des Kurbelzapfens 20.1 entspricht dem Abstand R der Achse 21.2 des Kurbelzapfens 21.1. Wie Fig. 3 ferner erkennen läßt, sind die Verbindungslinien zwischen den beiden Drehachsen 13 und 14 einerseits und den Achsen 20.2 und 21.2 andererseits gleichgerichtet, bei dem hier dargestellten Ausführungsbeispiel horizontal, d. h. parallel zur Bezugsebene B ausgerichtet, wie auch in Fig. 1 dargestellt.

Wird nun, wie anhand von Fig. 1 erläutert, über die Stelleinrichtung 10 die Kurbelwelle durch Verdrehen der Exzenterringe 3 verlagert, dann wird die Drehachse 13 auf einer entsprechenden Kreisbahn 22 um die Schwenkachse 14 bewegt und dementsprechend die Kurbelwelle 1 insgesamt gegenüber der horizontalen Bezugsebene B um ein dem Schwenkwinkel entsprechendes Maß vertikal angehoben bzw. bei entgegengesetzter Drehrichtung um ein entsprechendes Maß abgesenkt.

Da die Achsen 20.2 und 21.2 der Kurbelelemente den gleichen Abstand zueinander wie die Drehachsen 13 und 14 zueinander aufweisen, bewegen sich auch die Achsen 21.2 auf einer der Kreisbahn 22 entsprechenden Bahn. Damit ergibt sich gegenüber der Bezugsebene B für die Achsen 20.2 und 21.2 der Kurbelelemente 19 die gleiche Ausrichtung wie für die Achsen 13 und 14.

Wird nun der Drehkörper 17 antreibend gedreht, so wird über die Kurbelelemente 19 die Drehbewegung und damit auch das Drehmoment gleichsinnig und ohne Drehzahlschwankungen auf den Drehkörper 18 übertragen, da sich die Ausrichtung der beiden Kurbelachsen 20.2 und 21.2 und auch die Ausrichtung der beiden Drehachsen 13 und 14 während der Drehbewegung nicht ändert. Lediglich die Kurbelelemente 19 werden entsprechend relativ zwischen den beiden Drehkörpern 17 und 18 verdreht.

Die eingangs geschilderten Probleme bei der Verlagerung der Kurbelwelle zur Veränderung des Verdichtungsverhältnisses treten nicht nur hinsichtlich der Übertragung des Antriebsmomentes von der Kurbelwelle 1 auf die Abtriebswelle 15 auf. Das erfindungsgemäße Bauprinzip kann auch für einen Steuerantrieb eingesetzt werden, d. h. den Antrieb der Nockenwelle und ggf. den Antrieb der Nebenaggregate. Insbesondere der Steuerantrieb ist hierbei problematisch, da es nicht auf die Übertragung eines großen Drehmomentes sondern auf eine exakte, in einem vorgegebenen Übersetzungsverhältnis synchrone Übertragung der Kurbelwellendrehung auf die Nockenwelle bzw. die Nockenwellen ankommt. Hierzu ist, analog zu Fig. 1, an dem dem Kupplungselement 16 abgekehrten Ende der Kurbelwelle 1 in identischer Zuordnung ein entsprechendes Kupplungselement angeordnet, das im Hinblick auf die deutlich niedrigeren zu übertragenden Drehmomente mit kleinen Abmessungen konzipiert werden kann.

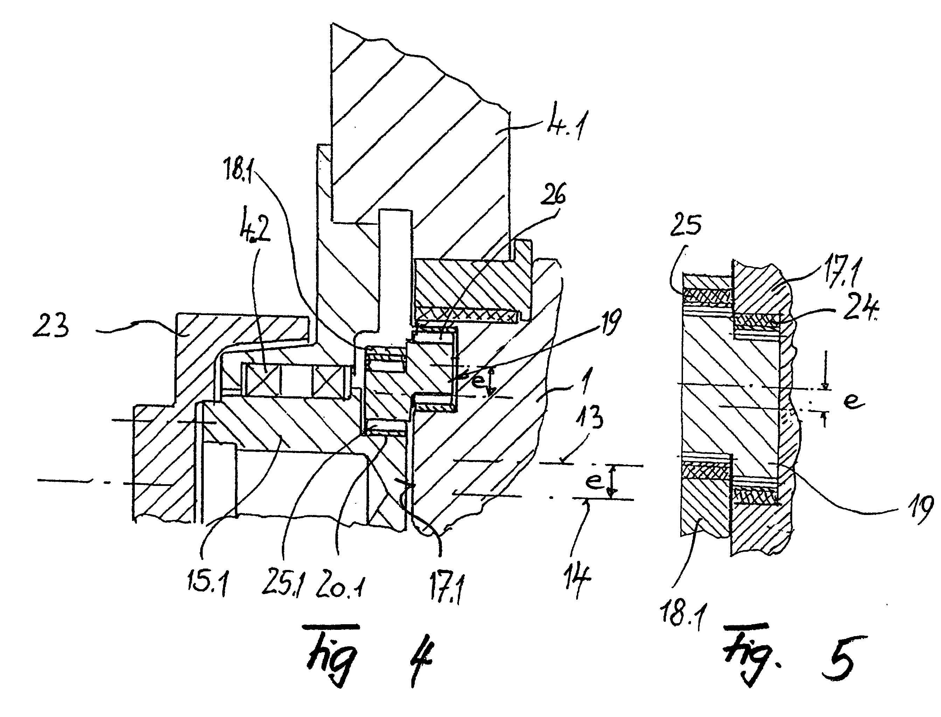

Ein Ausführungsbeispiel hierfür ist als Teillängsschnitt in Fig. 4 dargestellt. Auf ihrer dem Abtriebsende abgekehrten Seite ist die Kurbelwelle 1 stirnseitig mit einem das Endlager bildenden Zylinderkörper mit kreisscheibenförmiger Stirnfläche 17.1 versehen, der die Funktion des anhand von Fig. 2 und 3 beschriebenen Drehkörpers 17 zugeordnet ist.
Im Abstand e zur Drehachse 13 der Kurbelwelle 1 ist am Motorblock 4.1 in entsprechenden Lagern 4.2 eine Abtriebswelle in Form eines Wellenzapfens 15.1 ortsfest gelagert, mit dem ein Abtriebsrad 23, beispielsweise eine Zahnriemenscheibe, fest verbunden ist. An seinem der Kurbelwelle 1 zugeordneten Ende ist der Wellenzapfen 15.1 mit einem scheibenförmigen Drehkörper 18.1 versehen.

Die Stirnfläche 17.1 und der Drehkörper 18.1 sind nun entsprechend den Darstellungen gem. Fig. 2 und 3 mit Lagerbohrungen versehen, in denen jeweils ein Kurbelelement 19 entsprechend gelagert ist. Das Kurbelelement 19 ist hier ebenfalls in dem durch das Ende der Kurbelwelle 1 gebildeten Drehkörper und in dem Drehkörper 18.1 am Wellenzapfen 15.1 gelagert, beispielsweise in Wälzlagern, die insbesondere in der Form von Nadellagern ausgebildet sind. Aufbau und Funktion dieser Anordnung entsprechend im übrigen der anhand von Fig. 2 und 3 beschriebenen Ausführungsform.

Da für den Steuertrieb an einer Kolbenbrennkraftmaschine nur geringe Drehmomente zu übertragen sind, andererseits es aber auf eine synchrone Übertragung der Drehung der Kurbelwelle auf die anzutreibende Nockenwelle ankommt, sind bei der anhand von Fig. 4 beschriebenen Ausführungsform, wie die vergrößerte Teildarstellung in Fig. 5 zeigt, die als Nadellager 26 ausgebildeten Lagerungen in Hülsen 24, 25 aus einem gummielastischen Werkstoff mit entsprechender Härte gehalten und jeweils im zugehörigen Drehkörper 17.1 und 18.1 befestigt. Hierdurch gelingt es, von der Kurbelwelle herrührende Drehschwingungen zu dämpfen und gegebenenfalls ein Lagerspiel der Kurbelwellenlagerung auszugleichen, wenn diese als Gleitlager ausgebildet ist.

Bei dem in Fig. 5 dargestellten Ausführungsbeispiel ist das Kurbelelement 19 durch zwei achsversetzte Zylinderkörper mit gleichem Durchmesser gebildet.

Wie aus Fig. 2 ferner ersichtlich, ist der Zylinderkörper 20 in seinem vom Zylinderkörper 21 nicht überdeckten Bereich mit einer unwuchtmindernden Ausnehmung 20.3 versehen, so daß das Kurbelelement 19 in sich in bezug auf seine Drehachse 20.2 ausgewuchtet ist.

Die Erfindung wurde vorstehend anhand des Anwendungsfalls einer Kolbenbrennkraftmaschine erläutert. Sie ist in gleicher Weise für alle Kolbenmaschinen anwendbar, bei denen zur Veränderung der Betriebsbedingungen durch Verlagerung der Kurbelwelle der "aktive" Hubraum der einzelnen Zylinder einstellbar ist, beispielsweise bei einem Kolbenverdichter. Da hierfür bei dem erfindungsgemäßen Kupplungselement auch bei einer Verlagerung der Kurbelwelle relativ zur Antriebswelle die Abtriebswelle, d. h. die Kurbelwelle ohne Drehzahlschwankungen angetrieben wird, entfallen nachteilige Rückwirkungen auf den Antrieb, die bei einer durch die Kupplung erzeugten Drehungleichförmigkeit auftreten können.

Darüber hinaus ist das erfindungsgemäße Kupplungselement aufgrund seiner konstruktiven Vorteile (kurze Baulänge, Vervielfachung der Kurbelelemente zur Übertragung großer Drehmomente) und betrieblichen Vorteile (Drehzahlkonstanz bei Änderung der Position der Wellen zueinander) für alle Anwendungsfälle einsetzbar, in denen vergleichbare Verlagerungen zweier miteinander verbundener Wellen zueinander vorgenommen werden müssen.

## Patentansprüche

1. Kupplungselement zur Verbindung von zwei gleichachsig hintereinander und mit Querabstand (e) achsparallel zueinander angeordneten Wellen (1, 15), wobei die Höhenlage (a) einer Welle (1) zu einer festen Bezugsebene (B) durch achsparalleles Bewegen auf einer Kreisbahn einstellbar ist, deren Durchmesser dem maximalen Querabstand (e) entspricht, das mit zwei in parallelen Drehebenen ausgerichteten Drehkörpern (17, 18) versehen ist, die jeweils mit den einander zugeordneten Enden der beiden Wellen (1, 15) verbunden sind und die jeweils im gleichen radialen Abstand (R) zur jeweiligen Drehachse jeweils mit Lagerbohrungen versehen sind, in denen beide Drehkörper (17, 18)verbindende Kurbelelemente (19) gelagert sind, deren Kurbelradius der Exzentrizität (e) entspricht, wobei die Kurbelelemente (19) in Umfangsrichtung im Abstand zueinander angeordnet sind und jeweils aus einem ersten und einem zweiten Zylinderkörper (20.1, 21) gebildet sind, und die um das Abstandsmaß (e) der beiden Achsen (13, 14) achsversetzt zueinander angeordnet sind, **dadurch gekennzeichnet, daß** der erste und der zweite Zylinderkörper fest miteinander verbunder sind.

2. Kupplungselement nach Anspruch 1, **dadurch gekennzeichnet, daß** die Zylinderkörper den gleichen Durchmesser aufweisen.

3. Kupplungselement nach Anspruch 1 oder 2, **dadurch gekennzeichnet, daß** das Kurbelelement (19) einen ersten Zylinderkörper (20.1) aufweist, der einen größeren Druchmesser als der zweite Zylinderkörper (21) aufweist, wobei der zweite Zylinderkörper (21) sich innerhalb des Außenumfanges des ersten Zylinderkörpers (20.1) erstreckt und diesen in Achsrichtung zumindest auf einer Seite überragt.

4. Kupplungselement nach einem der Ansprüche 1 bis 3, **dadurch gekennzeichnet, daß** der erste Zylinderkörper (20.1) in seinem vom zweiten Zylinderkörper (21) nicht überdeckten Bereich mit einer unwuchtmindernden Ausnehmung (20.3) versehen ist.

5. Kupplungselement nach einem der Ansprüche 1 bis 4, **dadurch gekennzeichnet, daß** die Zylinderkörper in Wälzlagern (26) gelagert sind, die über Hülsen (24, 25) aus einem gummielastischem Werkstoff mit dem jeweils zugehörigen Drehkörper (17, 18) verbunden sind.

6. Kolbenmaschine mit variabel einstellbarem Hubraum durch Höhenverlagerung der Kurbelwelle (1) gegenüber einer Bezugsebene (B) miteinen Kupplungselement nach einem der Ansprüche 1 bis 5 zur Verbindung der Kurbelwelle mit einer Antriebswelle und/oder mit einem Steuertrieb.

7. Steuerastrieb mit einem Kupplungselement nach einem der Ansprüche 1 bis 5, **dadurch gekennzeichnet, daß** die Welle (15.1) Teil eines Steuerantriebs ist, der im wesentlichen durch einen mit einem Abtriebsrad (23) verbundenen Wellenzapfen gebildet wird, dessen Drehachse (14) gleichachsig zur Verdrehachse (14) der Exzenterringe (3) ausgerichtet ist und der mit einem Drehkörper (18.1) versehen ist, und daß die Stirnfläche (17.1) der Welle (1) als Drehkörper ausgebildet ist und daß beide Drehkörper (17.1, 18.1) über Kurbelelemente (19) miteinander verbunden sind.

## Claims

1. A coupling element for connecting two shafts (1, 15) arranged equiaxially in series and at a transverse distance (e) paraxially to each other, the vertical position (a) of a shaft (1) relative to a fixed reference plane (B) being adjustable by paraxial movement on a circular path, the diameter of which corresponds to the maximum transverse distance (e), which is provided with two rotary bodies (17, 18) oriented in parallel planes of rotation, each of which bodies is connected to the associated ends of the two shafts (1, 15) and each of which is provided with bearing bores at the same radial distance (R) from the respective axis of rotation in which crank elements (19) which connect both rotary bodies (17, 18) are mounted, the crank throw of which corresponds to the eccentricity (e), the crank elements (19), in the peripheral direction, being arranged spaced apart from each other, and in each case are formed of a first and a second cylindrical body (20.1, 21), and which are axially offset relative to each other by the distance (e) between the two axes (13, 14), **characterised in that** the first and the second cylindrical bodies are joined securely together.

2. A coupling element according to Claim 1, **characterised in that** the cylindrical bodies are of the same diameter.

3. A coupling element according to Claim 1 or 2, **characterised in that** the crank element (19) has a first cylindrical body (20.1) which has a larger diameter than the second cylindrical body (21), the second cylindrical body (21) extending within the outer periphery of the first cylindrical body (20.1) and projecting beyond the latter in the axial direction at least on one side.

4. A coupling element according to one of Claims 1 to 3, **characterised in that** the first cylindrical body (20.1) is provided with a recess (20.3) which reduces the unbalanced mass in its region which is not covered. by the second cylindrical body (21).

5. A coupling element according to one of Claims 1 to 4, **characterised in that** the cylindrical bodies are mounted in rolling bearings (26) which are connected to the respective associated rotary body (17, 18) via sleeves (24, 25) of a rubber-elastic material.

6. A piston engine with variably adjustable piston-swept volume due to vertical displacement of the crankshaft (1) relative to a reference plane (B) with a coupling element according to one of Claims 1 to 5 for connecting the crankshaft to a drive shaft and/or to a control drive.

7. A control drive with a coupling element according to one of Claims 1 to 5, **characterised in that** the shaft (15.1) is part of a control drive which is formed substantially by a shaft journal connected to an output gear (23), the axis of rotation (14) of which is oriented equiaxially to the axis of turning (14) of the eccentric rings (3) and which is provided with a rotary body (18.1), and that the end face (17.1) of the shaft (1) is designed as a rotary body and that both rotary bodies (17.1, 18.1) are joined together via crank elements (19).

## Revendications

1. Elément d'accouplement pour la liaison de deux arbres (1, 15) à axes parallèles placés coaxialement l'un derrière l'autre et avec un écart transversal (e) l'un par rapport à l'autre, pour lesquels la hauteur (a) d'un arbre (1) par rapport à un plan de référence (B) fixe est réglable par déplacement à axe parallèle sur une piste circulaire, dont le diamètre correspond à l'écart transversal (e) maximal, muni de deux corps rotatifs (17, 18) disposés dans des plans de rotation parallèles, lesdits corps rotatifs étant reliés respectivement avec les extrémités associées l'une à l'autre des deux arbres (1, 15) et étant munis chacun, à la même distance radiale (R) de l'axe de rotation correspondant, d'alésages de logement, dans lesquels sont logés des éléments de vilebrequin (19) reliant les deux corps rotatifs (17, 18), dont le bras de vilebrequin correspond à l'excentricité (e), les éléments de vilebrequin (19) étant disposés à distance l'un de l'autre dans le sens périphérique, et étant constitués chacun d'un premier et d'un second corps cylindriques (20.1, 21), qui sont disposés l'un par rapport à l'autre avec un décalage axial égal à l'écart (e) des deux axes (13, 14), **caractérisé en ce que** le premier et le second corps cylindriques sont fixement reliés l'un à l'autre.

2. Elément d'accouplement selon la revendication 1, **caractérisé en ce que** les corps cylindriques présentent le même diamètre.

3. Élément d'accouplement selon la revendication 1 ou 2, **caractérisé en ce que** l'élément de vilebrequin (19) présente un premier corps cylindrique (20.1), qui présente un diamètre plus grand que le second corps cylindrique (21), le second corps cylindrique (21) s'étendant à l'intérieur de la circonférence extérieure du premier corps cylindrique (20.1) et dépassant de celui-ci dans le sens de l'axe, au moins d'un côté.

4. Elément d'accouplement selon une des revendications 1 à 3, **caractérisé en ce que** le premier corps cylindrique (20.1), dans sa zone non recouverte par le second corps cylindrique (21), est muni d'un évidement (20.3) réduisant le déséquilibre.

5. Elément d'accouplement selon une des revendications 1 à 4, **caractérisé en ce que** les corps cylindriques sont logés dans des paliers à roulement (26), qui sont reliés, par des manchons (24, 25) en un matériau élastomère, avec le corps rotatif (17, 18) respectif correspondant.

6. Machine à piston avec cylindrée réglable de manière variable, par déplacement en hauteur de l'arbre (1) de vilebrequin par rapport à un niveau de référence (B), comportant un élément d'accouplement selon une des revendications 1 à 5, pour relier l'arbre de vilebrequin avec un arbre d'entraînement et/ou avec un entraînement de commande.

7. Entraînement de commande comportant un élément d'accouplement selon une des revendications 1 à 5, **caractérisé en ce que** l'arbre (15.1) fait partie d'un entraînement de commande qui est formé pour l'essentiel par un tourillon d'arbre relié à une roue d'entraînement (23), dont l'axe de rotation (14) est orienté de manière coaxiale avec l'axe de pivotement (14) de la bague d'excentrique (3) et qui est muni d'un corps rotatif (18.1), et **en ce que** la face frontale (17.1) de l'arbre (1) est agencée en tant que corps rotatif et **en ce que** les deux corps rotatifs (17.1, 18.1) sont reliés l'un à l'autre par des éléments de vilebrequin (19).
